# EUROPÄISCHE PATENTSCHRIFT

(11) **EP 3 138 756 B1**
(45) Veröffentlichungstag und Bekanntmachung des Hinweises auf die Patenterteilung: **25.07.2018**
(21) Anmeldenummer: 16186112.5
(22) Anmeldetag: 29.08.2016
(51) Int. Cl.: B62B 5/00, B62B 3/06

(54) **FLURFÖRDERZEUG**
INDUSTRIAL TRUCK
CHARIOT DE MANUTENTION

(30) Priorität: 01.09.2015 DE 102015114564
(43) Veröffentlichungstag der Anmeldung: 08.03.2017
(73) Patentinhaber: Jungheinrich Aktiengesellschaft, 22047 Hamburg (DE)
(72) Erfinder: Hohmann, Michael, 04277 Leipzig (DE); Muench, Daniel, 04736 Waldheim (DE)
(74) Vertreter: Hauck Patentanwaltspartnerschaft mbB

(56) Entgegenhaltungen:
- EP-A2- 1 630 123
- JP-U- 3 141 152
- US-A- 5 174 710
- US-A1- 2003 206 792
- US-B1- 7 744 335

## Beschreibung

Die Erfindung bezieht sich auf ein Flurförderzeug nach Patentanspruch 1.

Ein typisches Flurförderzeug setzt sich aus einem Antriebs- und einem Lastteil zusammen. Das Lastteil weist eine Gabel auf, mit der Lasten, z.B. beladene Paletten oder dergleichen, aufgenommen werden können. Hierbei unterscheidet man zwischen Niederhub und Hochhubfahrzeugen. Das Gehäuse des Lastteils, das in den meisten Fällen die Antriebsbatterie bei einem batteriegetriebenen Fahrzeug aufnimmt, hat eine an die Lastgabel angrenzende Vorderwand, welche zugleich die Aufnahme einer Last auf der Lastgabel begrenzt. Bei Niederhubwagen ist die Vorderwand Bestandteil des Gehäuses zur Aufnahme der Batterie. Die Batterie kann entweder seitlich oder von oben in das Gehäuse eingebracht bzw. aus diesem herausgehoben werden.

Bei der Aufnahme einer Last auf der Lastgabel geschieht es häufiger, dass die Last bzw. die die Last aufnehmende Palette gegen die Vorderwand stößt. Dadurch können Palette und aufgenommene Last beschädigt werden. Ferner kann auch das Gehäuse des Flurförderzeugs beschädigt werden. Schließlich wird durch das Anschlagen von Palette und/oder Last an die Vorderwand ein unangenehmes Geräusch erzeugt.

Es ist bekannt, das Lastteil mit einem spezifischen Lastrahmen auszustatten, der als Prallschutz wirkt. Dieser besteht aus einem Stahlblech von relativ großer Dicke. Ein derartiger Prallschutz ist ein separates Teil und ermöglicht keine Nachrüstung bei Flurförderzeugen. Bei der Aufnahme stößt eine Palette oder eine Last direkt gegen das Stahlelement, wodurch die Palette als auch die auf der Palette befindliche Ware beschädigt werden kann. Auch entsteht durch den Aufprall eine hohe Geräuschkulisse.

Aus US 5,174,710 ist ein Flurförderzeug mit einem einzigen Transportarm bekannt, der fahrzeugseitig durch eine Kontaktwand begrenzt ist, die zwei symmetrisch angeordnete Pads aus einem elastischen Material trägt.
Aus JP 3141152 ist ein Flurförderzeug bekannt geworden, an dessen Hubmast ein quaderförmiger Gegenstand über Haken einhängbar ist.

Aus US 7,744,335 B1 ist ein Flurförderzeug gemäß dem Oberbegriff von Anspruch 1 bekannt geworden, das an seiner Vorderwand einen streifenförmigen elastischen Dämpfer als Prallschicht besitzt.

Der Erfindung liegt die Aufgabe zugrunde, ein Flurförderzeug zu schaffen, bei dem die vom Flurförderzeug aufzunehmende Last bzw. Palette gegen unnötigen Verschleiß bei der Aufnahme geschützt werden soll.
Diese Aufgabe wird durch die Merkmale des Patentanspruchs 1 gelöst.
Bei dem erfindungsgemäßen Flurförderzeug ist an der Vorderseite der Vorderwand flächig eine Prallschicht aus flexiblem Kunststoff angebracht.
Mit Hilfe eines derartigen Prallschutzes werden Fahrzeug und auch aufzunehmende Last bzw. Palette geschont. Ferner wird durch die Erfindung eine Geräuschminimierung erzielt.
Die Prallschicht weist die Kontur der Vorderwand auf und deckt diese nahezu vollständig ab. Dadurch entsteht optisch ein ansprechendes Bild eines stabilen, robusten und kraftvollen Fahrzeugs.
Bei der Erfindung ist die Prallschicht auf einer Stahlplatte aufgebracht und mit dieser an der Vorderwand befestigt. Bei dieser hybriden Konstruktion fungiert die Stahlplatte als Skelett bzw. Träger für die Prallschicht. Stahlplatte und Prallschicht bilden eine Einheit, mit der ein Flurförderzeug auch nachträglich aufgerüstet werden kann. Auch ein Austausch ist jederzeit möglich.

Nach einer weiteren Ausgestaltung der Erfindung ist auf der der Prallschicht abgewandten Seite der Stahlplatte eine dämpfende Kunststoffschicht aufgebracht. Mit dieser Ausgestaltung wird der Prallschutz für das Fahrzeug, die Schonung der aufgenommenen Last und auch die Geräuschminimierung verbessert.

Die Prallschicht kann nach einer Ausgestaltung der Erfindung von einer Prallplatte gebildet sein, die auf einer Stahlplatte oder einem Stahlrahmen aufgeklebt oder durch Verschraubung oder einer anderen Verbindung mit dieser verbunden ist. Die Einheit aus Stahlplatte und Prallplatte kann mittels Schraubbefestigung oder Steck- oder Klemmverbindung an der Vorderwand des Flurförderzeugs befestigt werden.

Eine Möglichkeit der Befestigung besteht nach einer Ausgestaltung der Erfindung darin, dass die Stahlplatte an der oberen Kante mindestens einen Haken aufweist, mit dem sie an der oberen Kante der aus Blech geformten Vorderwand gehängt ist, wobei eine Schraubbefestigung im unteren Bereich der Stahlplatte bzw. Prallplatte erfolgt. Mit dieser Befestigungskonstruktion kann die Einheit aus Prallplatte und Stahlplatte unter Vorspannung an der Vorderwand angebracht werden. Nach einer weiteren Ausgestaltung der Erfindung lässt die Prallplatte bzw. Prallschicht an den unteren Ecken die Stahlplatte frei zur Anbringung einer Schraubbefestigung.

Damit die Prallschicht bzw. Prallplatte ihre Aufgabe erfüllen kann, muss sie eine minimale Dicke aufweisen, von z.B. mindestens 5 mm. Vorzugsweise hat die Blech- bzw. Stahlplatte eine Dicke von 2 - 3 mm. Die Prallschicht hat z. B. eine Dicke von 15 - 20 mm. Die Kunststoffschicht auf der Rückseite hat zu. B. eine Dicke von 1 - 2 mm, so dass sich eine Gesamtdicke von 18 - 25 mm ergibt. Als Kunststoff dient z. B. geschäumtes Material oder Vollmaterial wie Polyamid oder Gummi.

Ein Ausführungsbeispiel der Erfindung wird nachfolgend anhand von Zeichnungen näher erläutert.
- Fig. 1: zeigt perspektivisch ein Niederhubfahrzeug mit einem Prallschutz nach der Erfindung.
- Fig. 2: zeigt einen Schnitt durch die Vorderwand des Lastteils des Fahrzeugs nach Figur 1 entlang der Linie 2-2.
- Fig. 3: zeigt vergrößert eine Einzelheit nach Figur 2.
- Fig. 4: zeigt eine ähnliche Darstellung wie Figur 2 mit einer zusätzlichen Kunststoffbeschichtung auf der Innenseite.
- Fig. 5: zeigt die Einzelheit 5 nach Figur 4.

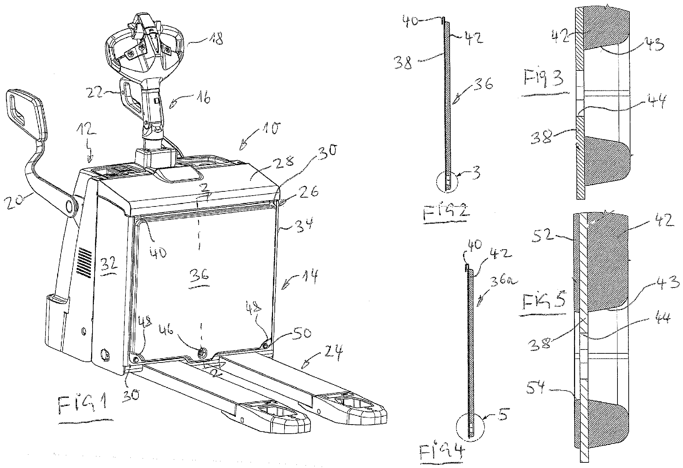

Ein in Figur 1 dargestelltes Flurförderzeug bzw. Niederhubfahrzeug weist ein Antriebsteil 12 auf sowie ein Lastteil 14. Das Antriebsteil hat an der Oberseite eine Deichsel 16 mit einem Deichselkopf 18 zur Betätigung des batteriebetriebenen Flurförderzeugs. Das Niederhubfahrzeug 10 weist eine nach hinten klappbare Plattform auf (nicht gezeigt), die durch zwei beabstandete Seitenschutzelemente 20, 22 eine mitfahrende Bedienungsperson begrenzen. Einzelheiten des Antriebsteils 12 sowie auch der klappbaren Plattform werden nicht weiter erörtert.

Das Lastteil 14 weist eine Lastgabel 24 auf, die am nicht zu erkennenden Rahmen des Lastteils 14 angebracht ist. Außerdem weist das Lastteil 14 ein Gehäuse 26 auf, das nach oben durch einen Deckel 28 geöffnet bzw. geschlossen werden kann. Das Gehäuse 16 (Trog) nimmt eine nicht gezeigte Batterie auf.

Das Gehäuse 26 weist Seitenwände 32, 34 auf sowie eine Vorderwand 30. Die Vorderwand 30 ist nach vorn bedeckt durch eine Prallschutzeinheit 36, deren Einzelheiten näher aus den Figuren 2 und 3 hervorgehen. Sie weist eine Stahlplatte 38 auf, die oben mit zwei Haken 40 versehen ist. Die Stahlplatte 38 wird bedeckt von einer Prallplatte aus Kunststoff 42, die Prallplatte 42 ist aus einem flexiblen bzw. elastischen und somit dämpfenden Kunststoff hergestellt. Sie weist nahe der unteren Kante mittig eine Öffnung 43 auf, die zu einer Öffnung 44 der Stahlplatte 38 ausgerichtet ist. Die Öffnungen 43, 44 dienen zur Aufnahme einer Befestigungsschraube 46 (siehe Figur 1) zur Befestigung der Prallschutzeinheit 36 an der Vorderwand 30. Die Haken 40, die an den Enden der oberen Kante der Stahlplatte 38 vorgesehen sind, werden über die obere Kante der Vorderwand 30 gehängt, wozu der Deckel 28 angehoben sein muss. Nach dem Aufhängen erfolgt das Anziehen der Schraube 46, wodurch die Einheit 36 unter Spannung an der Vorderwand 30 befestigt wird.

Die Prallplatte 42 lässt an den unteren Ecken etwas Platz, wie bei 48 zu erkennen. Dadurch kann mittels Befestigungsschrauben 50 die Stahlplatte 38 an der Vorderwand befestigt werden.

Wie erkennbar, bedeckt die Prallschutzeinheit 36 weitgehend die Vorderfläche der Vorderwand 30 und ermöglicht so einen wirksamen Prallschutz der von der Gabel 24 aufgenommenen Last. Außerdem wird dadurch wirksam das Gehäuse 26 geschützt. Schließlich erfolgt beim Anstoßen einer Last gegen den Prallschutz eine Geräuschminderung.

Die Ausführungsform nach den Figuren 4 und 5 unterscheidet sich von der nach den Figuren 2 und 3 nur geringfügig. Gleiche Teile wie in den Figuren 2 und 3 dargestellt, werden in den Figuren 4 und 5 mit gleichen Bezugszeichen versehen.

Wie insbesondere in Figur 5 zu erkennen, weist die Stahlplatte 38 auf der der Prallplatte 42 gegenüberliegenden Seite eine dämpfende Kunststoffschicht 52 auf.

Sie hat im Bereich der Öffnungen 43, 44 ebenfalls eine Öffnung 54. Bei der Anbringung der auf diese Weise gebildeten Prallschutzeinheit 36a an der Vorderwand des Niederhubwagens legt sich die Schicht 52 dämpfend zwischen der Vorderwand 30 und der Stahlplatte 38.

## Patentansprüche

1. Flurförderzeug mit einem Antriebsteil (12) und einem Lastteil (14), das eine Lastgabel (24) aufweist, wobei ein Gehäuse des Lastteils auf der der Lastgabel zugekehrten Seite eine Vorderwand (30) aufweist, durch welche die Aufnahme einer Last auf der Lastgabel begrenzt wird, wobei an der Vorderseite der Vorderwand (30) flächig eine Prallschicht (42) aus einem flexiblen Kunststoff angebracht ist, **dadurch gekennzeichnet, dass** die Prallschicht (42) die Kontur der Vorderwand (30) aufweist, diese nahezu vollständig abdeckt und auf eine Stahlplatte (38) aufgebracht und mit dieser an der Vorderwand (30) befestigt ist.

2. Flurförderzeug nach Anspruch 1, **dadurch gekennzeichnet, dass** die auf der der Prallschicht (42) gegenüberliegenden Seite der Stahlplatte (38) mit einer dämpfenden Kunststoffschicht (52) beschichtet ist.

3. Flurförderzeug nach Anspruch 1 oder 2, **dadurch gekennzeichnet, dass** die Prallschicht eine Prallplatte ist, die mittels Schrauben (46, 48) an der Vorderwand (30) befestigt ist.

4. Flurförderzeug nach einem der Ansprüche 1 bis 3, **dadurch gekennzeichnet, dass** die Stahlplatte an der oberen Kante mindestens einen Haken aufweist, mit dem sie an der oberen Kante der aus Blech geformten Vorderwand (30) gehängt ist und eine Schraubbefestigung im unteren Bereich der Stahlplatte (38) bzw. Prallplatte (42) erfolgt.

5. Flurförderzeug nach Anspruch 4, **dadurch gekennzeichnet, dass** die Prallplatte bzw. Prallschicht (42) an den unteren Ecken die Stahlplatte (38) freilässt zur Anbringung einer Schraubbefestigung (48).

6. Flurförderzeug nach Anspruch 5, **dadurch gekennzeichnet, dass** nahe der unteren Kante der Prallplatte mittig eine Öffnung (43) vorgesehen ist, durch die hindurch eine Schraube (46) zur Befestigung der Stahlplatte (38) geführt ist.

7. Flurförderzeug nach einem der Ansprüche 1 bis 6, **dadurch gekennzeichnet, dass** die Prallschicht bzw. Prallplatte eine Dicke von mindestens 5 mm aufweist.

## Claims

1. An industrial truck with a drive unit (12) and a load unit (14) which comprises a load fork (24), wherein a casing of the load unit has a front wall (30) at the side facing the load fork, by which the pick-up of a load onto the load fork is limited, wherein a baffle layer (42) of a flexible plastics material is attached flush to the front side of the front wall (30), **characterised in that** the baffle layer (42) has the contour of the front wall (30), covers the latter almost completely and is mounted on a steel board (38) and fastened on the front wall (30) together with it.

2. The industrial truck according to claim 1, **characterised in that** the side of the steel board (38) opposed to the baffle layer (42) is coated with a dampening plastics layer (52).

3. An industrial truck according to claim 1 or 2, **characterised in that** the baffle layer is a baffle plate which is fastened on the front wall (30) by means of screws (46, 48).

4. An industrial truck according to any one of the claims 1 to 3, **characterised in that** the steel board has at least one hook at the upper edge, by which it is hung on the upper edge of the front wall (30) formed of sheet metal, and that there is a screw fastening in the lower region of the steel board (38) or the baffle plate (42), respectively.

5. The industrial truck according to claim 4, **characterised in that** the baffle plate or baffle layer (42) uncovers the steel board (38) at the lower corners for the attachment of a screw fastening (48).

6. The industrial truck according to claim 5, **characterised in that** near to the lower edge of the baffle plate an opening (43) is centrally provided through which a screw (46) is guided for fastening the steel board (38).

7. An industrial truck according to any one of the claims 1 to 6, **characterised in that** the baffle layer or baffle plate has a thickness of at least 5 mm.

## Revendications

1. Chariot de manutention avec une partie motrice (12) et une partie de charge (14) qui comporte une fourche de charge (24), dans lequel un boîtier de la partie de charge a une paroi de front (30) sur le coté vis-à-vis de la fourche de charge, par laquelle la prise d'une charge sur la fourche de charge est limitée, une couche d'impact (42) en matière plastique flexible étant accrochée sur toute la surface du coté de front de la paroi de front (30), **caractérisé en ce que** la couche d'impact (42) a le contour de la paroi de front (30), la recouvre presque complètement et est montée sur une plaque d'acier (38) et fixée sur la paroi de front (30) ensemble avec celle-là.

2. Chariot de manutention selon la revendication 1, **caractérisé en ce que** le coté de la plaque d'acier (38) opposé à la couche d'impact (42) est revêtu d'une couche amortissante en matière plastique (52).

3. Chariot de manutention selon la revendication 1 ou 2, **caractérisé en ce que** la couche d'impact est une dalle d'impact qui est accrochée sur la paroi de front (30) à l'aide de vis (46, 48).

4. Chariot de manutention selon une des revendications 1 à 3, **caractérisé en ce que** la plaque d'acier a au moins un crochet sur le bord supérieur par lequel elle est pendue sur le bord supérieur de la paroi de front (30) en tôle, et il y a une fixation à vis dans la région inférieure de la plaque d'acier (38) ou respectivement de la dalle d'impact (42).

5. Chariot de manutention selon la revendication 4, **caractérisé en ce que** la dalle d'impact ou couche d'impact (42) expose la plaque d'acier (38) dans les coins inférieurs pour y accrocher une fixation à vis (48).

6. Chariot de manutention selon la revendication 5, **caractérisé en ce que** près du bord inférieur de la dalle d'impact une ouverture (43) est centralement prévue à travers laquelle une vis (46) est guidée pour fixer la plaque d'acier (38).

7. Chariot de manutention selon une des revendications 1 à 6, **caractérisé en ce que** la couche d'impact ou dalle d'impact a une épaisseur d'au moins 5 mm.
